# EUROPEAN PATENT APPLICATION

(11) **EP 1 622 292 A1**
(43) Date of publication of application: **01.02.2006**
(21) Application number: 05253506.9
(22) Date of filing: 08.06.2005
(51) Int. Cl.: H04H 1/00

(54) **Method and apparatus for controlling the compulsory display of advertisement in digital broadcasting**

(30) Priority: 11.06.2004 KR 2004042915
(71) Applicant: SAMSUNG ELECTRONICS CO., LTD., Suwon-si, Gyeonggi-do (KR)
(72) Inventor: Park, Ju-hee, Yeongtong-gu Suwon-si Gyeonggi-do (KR); Park, Jeong-hoon, Gwanak-gu Seoul (KR); Youm, Sun-hee, Suwon-si Gyeonggi-do (KR); Park, Sung-il, Suwon-si Gyeonggi-do (KR); Seo, Ju-hee, Yeongtong-gu Suwon-si Gyeonggi-do (KR)
(74) Representative: Waddington, Richard

(57) **Abstract**

Provided are a method of transmitting digital broadcasts, a method and apparatus for controlling the display of digital broadcasting, and a computer-readable recording medium on which a program executing the controlling method is recorded. The method of controlling the display of digital broadcasting includes receiving an ensemble comprising at least one advertising channel (420/430) and controlling so that advertisements transmitted via at least one of the advertising channels (420/430) included in the received ensemble are compulsorily displayed. In this method, since digital broadcasting makes it possible to display a plurality of services, an advertising service can be displayed compulsorily, thereby delivering maximum advertising effects to a broadcasting service provider and providing digital broadcasting services to viewers at lower prices.

## Description

The present invention relates to digital broadcasting, and more particularly, to a method of transmitting digital broadcasts, a method and apparatus for controlling the display of digital broadcasting, and a computer-readable recording medium on which a program executing the controlling method is recorded.

Analog audio broadcasting has many technical limitations. For example, when a receiver moves, the quality of a signal received by the receiver can deteriorate rapidly. Moreover, analog audio broadcasting requires high power transmitting to reduce the effects of noise, which undermines power efficiency. Spectrum efficiency is also low since different frequencies are used in neighboring areas to prevent inter-channel interference. In this regard, there has been research into digital audio broadcasting (DAB) that can replace conventional AM/FM radio broadcasting.

DAB, which was developed in Europe, is multimedia broadcasting that can transmit high quality audio as well as still images, moving images, or graphics in multiple channels, and provide various value-added data. Multimedia services offered by DAB include a program-associated information service, a non-program associated information service, and a moving image transmission service.

In the program-associated information service, a program is accompanied by information relevant to the program. For example, traffic information may be accompanied by travel information or news headlines may be accompanied by associated images. A weather forecast and traffic information may also be accompanied by electronic maps. In the non-program associated information service, information irrelevant to a program, for example, website broadcasting or a GPS for DAB, is provided.

To enable a receiver to receive such a variety of services stably even when the receiver is moving, an orthogonal frequency division multiplexing (OFDM) transmission method is used because the OFDM method is hardly affected by multi-path fading and reduces the degradation of transmission performance.

According to EUREKA-147, which is a DAB standard, a CD-like quality audio service and diverse additional services can be provided in a bandwidth of approximately 2 MHz using audio compression technology that delivers high-quality sounds according to an MPEG-1 audio layer II. To transmit audio data and additional data at an optimal data rate in a limited bandwidth and a given channel environment, unequal error protection (UEP) is used for the audio data, and equal error protection (EEP) for the additional data.

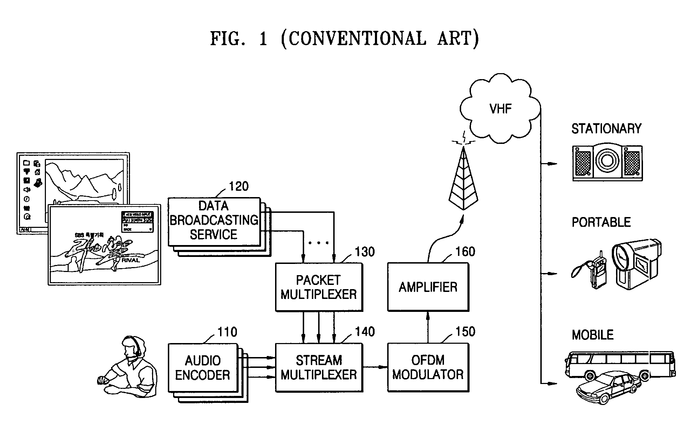

FIG. 1 illustrates the configuration of a conventional DAB system. Referring to FIG. 1, audio data to be broadcast is input to an audio encoder 110, and the audio encoder 110 encodes the audio data. The encoded audio data is channel-coded and is input to a stream multiplexer 140.

Since there may be a plurality of audio services, i.e. a plurality of types of audio data, the conventional DAB system may include a plurality of audio encoders 110.

A data broadcasting service 120 produces additional data, such as text information without audio or web information, that is input to and multiplexed by a packet multiplexer 130. The multiplexed additional data is channel-coded and input to the stream multiplexer 140. Since there may be a plurality of data broadcasting services 120, the conventional DAB system may include a plurality of packet multiplexers 130.

The stream multiplexer 140 multiplexes the encoded audio data and the data broadcasting service data, adds additional information and synchronization information to each of the multiplexed data, and creates and outputs a DAB transmission frame. The DAB transmission frame thus created is transmitted in the VHF band via an OFDM modulator 150 and an amplifier 160. A receiver may be stationary, portable, or mobile.

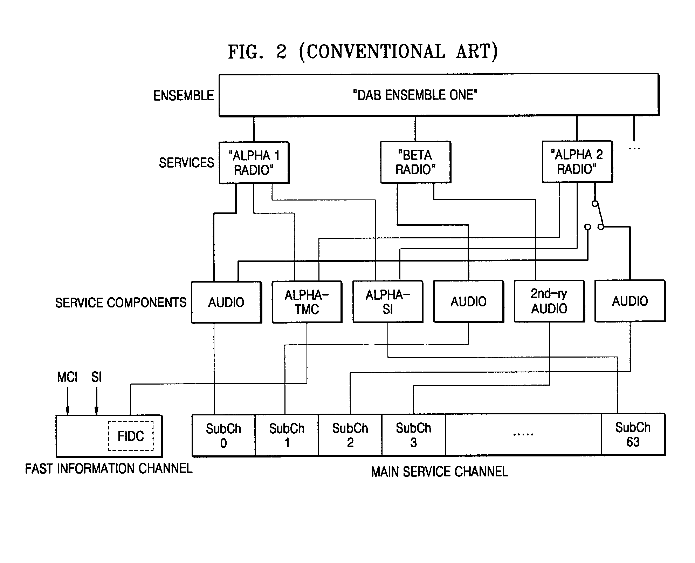

FIG. 2 illustrates an example of a structure of a conventional DAB service. A plurality of encoded audio streams and a plurality of data are channel-coded and multiplexed with system data into a bit stream, which is called an ensemble. A service, such as a program service or a data service, is selected by a user. A service is composed of service components. Service components of a service are connected to one another by multiplex configuration information (MCI). Each service component is transmitted in a sub-channel (SubCh) or a fast information data channel (FIDC).

Referring to FIG. 2, "DAB ENSEMBLE ONE" has three services: "alpha 1 radio," "beta radio," and "alpha 2 radio." Each of the services is composed of service components. For example, the "alpha 1 radio" is composed of basic audio, an ALPHA-TMC, and an ALPHA-SI. Each service component is transmitted in a sub-channel (SubCh) or a fast information data channel (FIDC). For example, if the "alpha 1 radio" is a sports service, audio of the sports service is the basic audio, relevant text information is the ALPHA-TMC, and the configuration information of the "alpha 1 radio" is the ALPHA-SI. Here, TMC is a traffic message channel in which real-time traffic information is transmitted.

The structure of a service and service components may be obtained from the MCI. Since the MCI includes information regarding each service component, it enables a receiver to analyze service components. For example, if a user receives the ALPHA-TMC service component, a receiver analyzes the MCI and determines that the ALPHA-TMC service component is transmitted in the FIDC. Therefore, a receiver reads the FIDC in a fast information channel (FIC) and provides the ALPHA-TMC service component to the user. The FIDC is used to transmit small components of data that must be transmitted within a predetermined period of time.

Since each of the service components is transmitted in one of the sub-channels or the fast information data channel (FIDC), the configuration of each of the sub-channels may be arbitrarily changed by a service provider. The configuration of each of the sub-channels may also be modified according to changes in channel capacity or a service. If the configuration of one of the sub-channels or a service is changed, a new MCI must be transmitted in advance so that the receiver can receive the changed service.

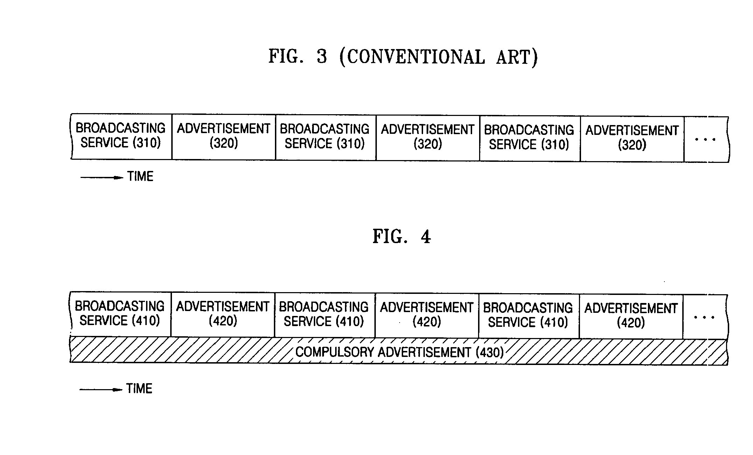

FIG. 3 illustrates how advertisements are broadcast in conventional digital broadcasting with respect to time.

In conventional analog broadcasting or digital broadcasting, advertisements are broadcast between predetermined broadcasting services in terms of time. Specifically, an advertisement 320 is broadcast at intervals between broadcasting services 310. Therefore, while watching the broadcasting service 310, when the advertisement 320 is received, a viewer may change the channel or not watch a display screen or do other tasks, which significantly undermines advertising effects.

The present invention provides a method of transmitting digital broadcasts, a method and apparatus for controlling the display of digital broadcasting, and a computer-readable recording medium on which a program executing the controlling method is recorded, all of which take advantage of the characteristic of digital broadcasting of being able to display a plurality of services to increase advertising effects.

According to the present invention there is provided an apparatus and method as set forth in the appended claims. Preferred features of the invention will be apparent from the dependent claims, and the description which follows.

According to an aspect of the present invention, there is provided a digital broadcasting transmission method including generating an ensemble comprising a plurality of sub-channels, the plurality of sub-channels comprising at least one advertising channel; and multiplexing the ensemble into a digital broadcasting transmission frame and transmitting the digital broadcasting transmission frame.

The digital broadcasting transmission frame may include a fast information channel into which information regarding the at least one advertising channel is inserted.

According to another aspect of the present invention, there is provided a method of controlling the display of digital broadcasting, including receiving an ensemble comprising one or more advertising channels; and controlling so that advertisements transmitted via at least one of the advertising channels, included in the received ensemble, are compulsorily displayed.

The controlling may include determining whether to display the advertisements of the advertising channels included in the received ensemble, to generate a determination; and controlling so that contents of the advertising channels included in the received ensemble are compulsorily displayed based on the determination.

The determining whether to display the advertisements of the advertising channels may include attempting to decipher a predetermined encryption key; and determining to display the advertisements compulsorily if the encryption key is not deciphered and determining not to display the advertisements compulsorily if the encryption key is deciphered. The determining whether to display the advertisements of the advertising channels may include determining whether to display the advertisements compulsorily based on whether a receiver receiving the ensemble is a fee-charging service receiver or a free service receiver, whether the receiver is sold at a price that is offered if a user allows the advertisements to be compulsorily displayed, or whether a user has authority not to allow the advertisements to be displayed compulsorily.

The controlling for displaying may include selecting at least one of the advertising channels included in the received ensemble to be displayed compulsorily if it is determined to display the advertisements of the advertising channels compulsorily.

The controlling for displaying may include selecting a sub-channel selected by a user from a plurality of sub-channels included in the ensemble after selecting one of the advertising channels; and reorganizing contents of the selected advertising channel and contents of the sub-channel selected by the user. The controlling for displaying may include compulsorily displaying the contents of a sub-channel selected by a user from a plurality of sub-channels included in the ensemble if it is determined not to display compulsorily the advertisements of the advertising channels.

According to another aspect of the present invention, there is provided an apparatus for controlling the display of digital broadcasting including a controller receiving an ensemble comprising one or more advertising channels and controlling a display to compulsorily display advertisements transmitted via at least one of the advertising channels included in the received ensemble.

According to another aspect of the present invention, there is provided a computer-readable recording medium on which a program executing a method of controlling the display of digital broadcasting is recorded. The method includes receiving an ensemble comprising at least one advertising channel; and controlling so that advertisements transmitted via the at least one advertising channel included in the received ensemble are compulsorily displayed.

For a better understanding of the invention, and to show how embodiments of the same may be carried into effect, reference will now be made, by way of example, to the accompanying diagrammatic drawings in which:
FIG. 1 illustrates the configuration of a conventional digital audio broadcasting (DAB) system;
FIG. 2 illustrates an example of a structure of a conventional DAB service;
FIG. 3 illustrates how advertisements are broadcast in conventional digital broadcasting;
FIG. 4 illustrates how advertisements are broadcast in digital broadcasting according to the present invention;
FIG. 5 illustrates the structure of an ensemble according to an embodiment of the present invention;
FIG. 6 illustrates a structure of a DAB transmission frame according to an embodiment of the present invention;
FIG. 7 is a block diagram of a DAB receiver according to an embodiment of the present invention; and
FIG. 8 is a flowchart illustrating a method of controlling the display of a compulsory advertisement according to the present invention.

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

The present invention suggests a broadcasting receiver controlled to compulsorily display advertisements to increase the effects of advertisement in digital broadcasting. The use of such a broadcasting receiver may be promoted by offering rewards to its users.
FIG. 4 illustrates how advertisements are broadcast with respect to time in digital broadcasting according to an embodiment of the present invention. Referring to FIG. 4, a compulsory advertisement 430 is broadcast throughout the time when broadcasting services 410 are displayed on the receiver. In addition, the broadcasting services 410 are included in a channel selected by a user, and an advertisement 420 may be provided at intervals between the broadcasting services 410.

In this structure, the user will have to watch an advertisement displayed compulsorily or the displaying of the advertisement will be set as a default on a portion of a screen of the receiver. Broadcasting contents of a channel selected by the user are displayed on the remaining portions of the screen of the receiver. In this case, since the advertisement is displayed on a portion or an entire portion of a screen of a receiver regardless of which channel a user selects, advertising effects may be enhanced. To display an advertisement on a portion or the entire portion of the screen of the receiver, a banner advertising form may be used. Predetermined rewards may be provided to users who watch compulsory advertisements or use receivers displaying compulsory advertisements in order to promote the use of the receivers.

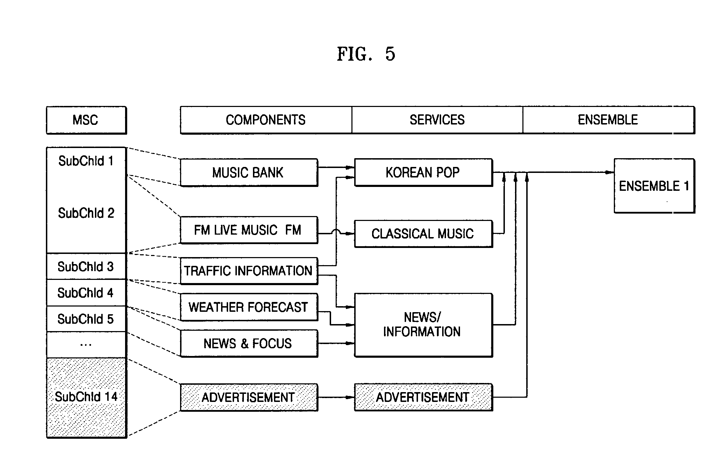

FIG. 5 illustrates the structure of an ensemble according to an embodiment of the present invention. A broadcasting station may set one or more of a plurality of sub-channels included in the ensemble as an advertising channel to enhance profitability. Referring to FIG. 5, the ensemble is composed of 14 sub-channels 1 through 14, and the sub-channel 14 is an advertising channel. In this structure, an advertisement transmitted in the sub-channel 14 is displayed on a portion of a screen of a receiver regardless of which channel a user selects. A service selected by a user from the services of "Korean pop," "Classical music," and "News/Information" is displayed on the remaining portion of the screen of the receiver.

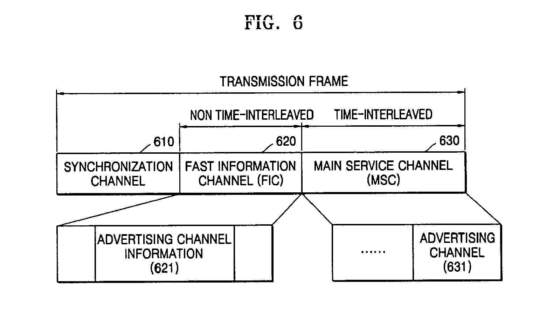

FIG. 6 illustrates the structure of a digital audio broadcasting (DAB) transmission frame according to an embodiment of the present invention. The DAB transmission frame includes a synchronization channel (SC) 610, a fast information channel (FIC) 620, and a main service channel (MSC) 630. The SC 610 includes a NULL symbol that can be used to determine a transmission mode, and a reference symbol required for synchronizing an OFDM symbol and a carrier frequency.

The FIC 620 is used to transmit information necessary for a receiver to process data, for example, information regarding the configuration or multiplexed form of a service, or transmit data that needs to be transmitted quickly. The FIC 620 includes multiplex configuration information (MIC) that contains information regarding the structure of each sub-channel and service information (SI), that is, additional information for each service. Therefore, once the FIC 620 is identified, it can be determined which service data transmitted in the MSC 630 is for and which application will use the service.

In particular, the FIC 620 contains advertising channel information 621 regarding at least one advertising channel included in the ensemble. The broadcasting receiver according to an embodiment of the present invention parses the FIC 620 to identify which advertising channels are included in the ensemble. The advertising channel information 621 of the ensemble may not be inserted into the FIC 620 and may be transmitted according to a mechanism agreed upon by a broadcasting station and the broadcasting receiver.

Contents data provided by a service provider is transmitted in the MSC 630. When there is not enough space in the FIC 620, data to be transmitted as described above may be transmitted in the MSC 630. However, this will increase the time to decode the data due to time interleaving.

Data may be transmitted in a stream mode or a packet mode. In the stream mode, data is transmitted without a header at a fixed bit rate in a given sub-channel. In the packet mode, data is transmitted with a header. Hence, a plurality of service components may be multiplexed within a given sub-channel. To extract real data, a header of a packet must be analyzed.

In particular, the MSC 630 includes at least one advertising channel 631 designed to be output compulsorily.

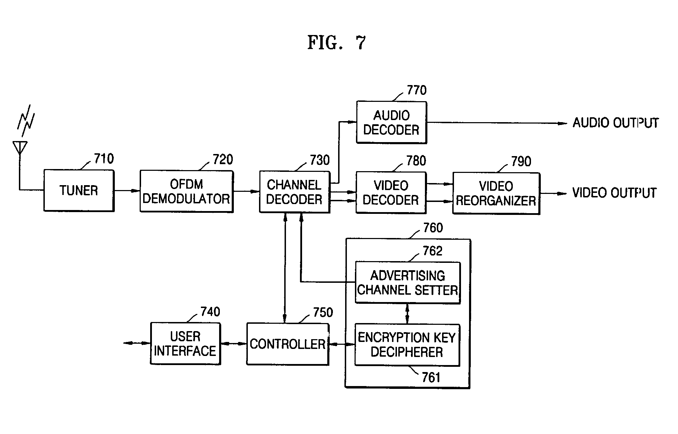

FIG. 7 is a block diagram of a DAB receiver according to an embodiment of the present invention. Referring to FIG. 7, the DAB receiver includes a tuner 710, an OFDM demodulator 720, a channel decoder 730, a user interface 740, a controller 750, an advertising channel manager 760, an audio decoder 770, a video decoder 780, and a video reorganizer 790.

The tuner 710 receives an OFDM-modulated signal. The OFDM demodulator 720 receives the OFDM-modulated signal from the tuner 710, demodulates the OFDM-modulated signal into a DAB transmission frame, and transmits the DAB transmission frame to the channel decoder 730.

The channel decoder 730 decodes the DAB transmission frame and generates audio and video service data. The audio decoder 770 receives and decodes the audio service data output from the channel decoder 730. The video decoder 780 demultiplexes video service data into a plurality of video data and outputs the video data on a screen of the DAB receiver. The controller 750 controls each of the elements of the DAB receiver.

The DAB receiver may receive a plurality of services through a plurality of channels, and a user may select one of the channels via the user interface 740. Information regarding the selected channel is transmitted to the channel decoder 730 via the controller 750. The channel decoder 730 outputs an audio service and video contents of the selected channel to the audio decoder 770 and the video decoder 780, respectively.

If a user selects multiple channels, the contents of more than one channel are transmitted to the video decoder 780. The video reorganizer 790, which receives the contents, reorganizes the contents according to a predetermined format and outputs the reorganized contents. A service may be composed of a plurality of service components, but information regarding the manner in which the service components are displayed on a DAB receiver is not transmitted to the DAB receiver. Therefore, the manner in which service components of a received service are displayed depends on the DAB receiver.

In particular, the DAB receiver according to the present embodiment includes the advertising channel manager 760 to display an advertising channel. An advertising channel is set compulsorily based on a decision. In the present embodiment, the advertising channel manager 760 and the controller 750 are separate, but the advertising channel manager 760 may be included in the controller 750.

To perform compulsory advertising, the advertising channel manager 760 includes an encryption key decipherer 761 and an advertising channel setter 762.

The encryption key decipherer 761 attempts to decipher an encryption key to determine whether to set a compulsory advertising channel. If it is not possible to decipher the encryption key, the encryption key decipherer 761 transmits a control signal to the advertising channel setter 762 indicating that the compulsory advertising channel must be displayed.

In response to the control signal, the advertising channel setter 762 obtains advertising channel information with reference to the parsed FIC 620 containing the advertising channel information, sets an advertising channel based on the advertising channel information, and transmits information regarding the set advertising channel to the channel decoder 730. The channel decoder 730 extracts the contents of the set advertising channel based on the information regarding the set advertising channel regardless of a channel selected by a user and transmits the contents to the video decoder 780. The contents are decoded by the video decoder 780 and output to a display (not shown) of the DAB receiver via the video reorganizer 790. In this way, if a compulsory advertising channel is set, the contents of the set advertising channel can be displayed on the display regardless of a channel selected by a user.

When a user selects a channel at a predetermined time, the controller 750 transmits information regarding the selected channel to the channel decoder 730. The channel decoder 730 extracts the contents of the selected channel based on the information regarding the selected channel and transmits the contents to the video decoder 780.

The video decoder 780 decodes the contents of the set advertising channel and the contents of the channel selected by the user and transmits the decoded contents to the video reorganizer 790. The video reorganizer 790 reorganizes images of the decoded contents and outputs the result of the reorganization. The contents of the set advertising channel which are displayed may be in the form of banner advertising.

If the encryption key decipherer 761 can decipher an encryption key, it transmits a signal indicating that the encryption key has been deciphered to the controller 750. Then, the controller 750 controls the DAB receiver to operate normally. In other words, the contents of the selected channel is displayed on the screen of the DAB receiver without the contents of an advertising channel.

Whether an encryption key can be deciphered must be determined when the DAB receiver starts to provide a broadcasting service. If the encryption key decipherer 761 cannot decipher an encryption key, an advertising channel must be set under any conditions, and an advertisement must be displayed before a user interface through which a user can select a service is provided. The encryption key decipherer 761 may be configured in any way as long as it can distinguish a DAB receiver displaying an advertisement compulsorily from a DAB receiver allowing a user to determine whether to have an advertisement displayed compulsorily.

When displaying an advertisement compulsorily, the DAB receiver displays an advertisement under any circumstances, for example, even when other broadcasting services are not rendered. Therefore, the displaying of an advertisement according to the present invention is different from the conventional analog broadcast method which is constrained by time. Similarly, the displaying of an advertisement according to the present invention, differs from banner advertisements on the Internet which can be removed in a display by user's operation. If an advertising channel is not received, the user interface 740 where a user can select a desired service is not displayed. Thus, the user cannot receive any broadcasting services.

On the other hand, when the encryption key decipherer 761 can decipher an encryption key, the DAB receiver can selectively display an advertisement. Therefore, the DAB receiver displays channels according to only a service selected by a user. However, if the user desires to watch an advertisement, the user can select an advertising service and watch the advertising service at any time, thereby adding flexibility to the DAB receiver. This feature is based on the fact that a plurality of services can be displayed at once since an ensemble can have a plurality of sub-channels.

The DAB receiver may be designed to flexibly display a compulsory banner advertisement for broadcasting purposes in response to a control signal generated by a display control unit included in the DAB receiver.

Users may be rewarded for watching advertisements to promote the spread and use of DAB receivers displaying compulsory advertisements. For example, a free or fee-charging service may be provided depending on the type of the DAB receiver and whether a user allows compulsory advertising. If a user allows compulsory advertising or uses a DAB receiver designed to display the compulsory advertisement, broadcasting contents are provided as a free service. If not, the broadcasting contents are provided as a fee-charging service.

The price of a DAB receiver may also differ depending on whether a compulsory advertisement is allowed. If a user chooses to watch a compulsory advertisement when buying a DAB receiver, the DAB receiver may be offered at a low price or free of charge. If not, the DAB receiver may be offered at a standard price.

Users may be given a password for deciphering an encryption key. If a user deciphers an encryption key using the password and does not watch a compulsory advertisement, points or mileage is not accumulated. If the user watches the compulsory advertisement without deciphering the encryption key using the password, points or mileage is accumulated. Then, the user can watch fee-charging broadcasting services for free using the accumulated points or mileage. Such rewards will induce users to watch compulsory advertisements, thereby enhancing advertising effects.

In the examples described above, whether a user chooses to watch a compulsory advertisement is determined by whether an encryption key has been deciphered or using other similar methods.

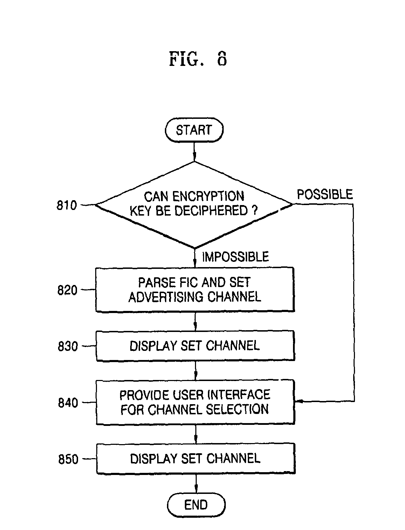

FIG. 8 is a flowchart illustrating a method of controlling the display of a compulsory advertisement according to the present invention. Referring to FIG. 8, the encryption key decipherer 761 attempts to decipher an encryption key (operation 810). If the encryption key decipherer 761 can decipher the encryption key, a user interface 740 is provided, where a user can select a channel (operation 840). If the user selects a channel, the controller 750 controls to display the selected channel on the screen (operation 850).

If the encryption key decipherer 761 cannot decipher the encryption key, the advertising channel setter 762 obtains advertising channel information from the parsed FIC and sets an advertising channel based on the advertising channel information (operation 820). The channel decoder 730 extracts the contents of the set advertising channel from information regarding the set advertising channel, decodes the contents, and displays the contents on the screen of the DAB receiver (operation 830).

Subsequently, the user interface 740, where a user can select a channel is provided (operation 840). When the user selects a channel, the selected channel is displayed on the screen (operation 850). The contents of the advertising channel set in advance and the contents of the channel selected by the user are reorganized by the video reorganizer 790 and then displayed on the screen.

The method of controlling the display of digital broadcasting can also be implemented as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet).

The computer-readable recording medium can also be distributed over network-coupled computer systems so that the computer-readable code is stored and executed in a distributed fashion. Also, functional programs, codes, and code segments for accomplishing the present invention can be easily construed by programmers skilled in the art to which the present invention pertains.

As described above, according to the present invention, since digital broadcasting makes it possible to display a plurality of services, an advertising service can be displayed compulsorily, thereby delivering maximum advertising effects to a broadcasting service provider and providing digital broadcasting services to viewers at lower prices. Further, a DAB receiver is less constrained by time and event types when receiving a compulsory advertisement than a website posting banner ads or an analog TV. In addition, a user can decide whether to watch an advertisement by deciphering or not deciphering an encryption key.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting transmission method, comprising:
generating an ensemble comprising a plurality of sub-channels, the plurality of sub-channels comprising at least one advertising channel (420/430); and
multiplexing the ensemble into a digital broadcasting transmission frame and transmitting the digital broadcasting transmission frame.

2. The method of claim 1, wherein the digital broadcasting transmission frame includes a fast information channel (620) into which information regarding the at least one advertising channel (420/430) is inserted.

3. A method of controlling the display of digital broadcasting, comprising:
receiving an ensemble comprising one or more advertising channels (420/430); and
controlling so that advertisements transmitted via at least one of the advertising channels (420/430), included in the received ensemble, are compulsorily displayed.

4. The method of claim 3, wherein the controlling, comprises:
determining whether to display the advertisements of the advertising channels (420/430), included in the received ensemble, to generate a determination; and
controlling so that contents of the advertising channels (420/430) included in the received ensemble are compulsorily displayed based on the determination.

5. The method of claim 4, wherein the determining whether to display the advertisements of the advertising channels (420/430), comprises:
attempting to decipher a predetermined encryption key; and
determining to display the advertisements compulsorily if the encryption key is not deciphered and determining not to display the advertisements compulsorily if the encryption key is deciphered.

6. The method of claim 4 or claim 5, wherein the determining whether to display the advertisements of the advertising channels (420/430), comprises:
determining whether to display the advertisements compulsorily based on whether a receiver receiving the ensemble is a fee-charging service receiver or a free service receiver.

7. The method of any one of claims 4 to 6, wherein the determining whether to display the advertisements of the advertising channels (420/430), comprises:
determining whether to display the advertisements compulsorily based on whether a receiver is sold at a price that is offered if a user allows the advertisements to be compulsorily displayed.

8. The method of any one of claims 4 to 7, wherein the determining whether to display the advertisements of the advertising channels (420/430), comprises:
determining whether to display the advertisements compulsorily based on whether a user has authority not to allow the advertisements to be displayed compulsorily.

9. The method of any one of claims 4 to 8, wherein the controlling for displaying, comprises:
selecting at least one of the advertising channels (420/430) included in the received ensemble to be displayed compulsorily if it is determined to display the advertisements of the advertising channels (420/430) compulsorily.

10. The method of claim 5, wherein the controlling for displaying, comprises:
selecting a sub-channel selected by a user from a plurality of sub-channels included in the ensemble after selecting one of the advertising channels (420/430); and
reorganizing contents of the selected advertising channel (420/430) and contents of the sub-channel selected by the user.

11. The method of any one of claims 4 to 10, wherein the controlling for displaying, comprises:
compulsorily displaying the contents of a sub-channel selected by a user from a plurality of sub-channels included in the ensemble if it is determined not to display compulsorily the advertisements of the advertising channels (420/430).

12. An apparatus for controlling the display of digital broadcasting, comprising:
a controller (750) for receiving an ensemble comprising one or more advertising channels (420/430) and for controlling a display to compulsorily display advertisements transmitted via at least one of the advertising channels (420/430) included in the received ensemble.

13. The apparatus of claim 12, wherein the controller (750) is operable to determine whether to display the advertisements of the advertising channels (420/430), included in the received ensemble, to generate a determination, and to control the display to compulsorily display contents of the advertising channels (420/430) included in the received ensemble based on the determination.

14. The apparatus of claim 13, wherein the controller (750) is operable to determine whether to display the advertisements compulsorily based on whether a receiver receiving the ensemble is a fee-charging service receiver or a free service receiver.

15. The apparatus of claim 13 or claim 14, wherein the controller (750) is operable to determine whether to display the advertisements compulsorily based on whether the receiver is sold at a price that is offered if a user allows the advertisements to be displayed compulsorily.

16. The apparatus of any one of claims 13 to 15, wherein the controller (750) is operable to determine whether to display the advertisements compulsorily based on whether a user has authority not to allow the advertisements to be displayed compulsorily.

17. The apparatus of any one of claims 13 to 16, wherein the controller (750) is operable to select at least one of the advertising channels (420/430) included in the received ensemble to be displayed compulsorily if it is determined that the advertisements of the advertising channels (420/430) are to be displayed compulsorily.

18. The apparatus of claim 17, wherein the controller (750) is operable to select a sub-channel selected by a user from a plurality of sub-channels included in the ensemble after selecting one of the advertising channels (420/430) and is operable to reorganize contents of the selected advertising channel (420/430) and contents of the sub-channel selected by the user.

19. The apparatus of any one of claims 12 to 18, wherein the controller (750), comprises:
an encryption key decipherer (761) for deciphering a predetermined encryption key and for determining whether to display the advertisements compulsorily if the encryption key can not be deciphered by the decipherer and for determining not to display the advertisements compulsorily if the encryption key can be deciphered.

20. A computer-readable recording medium on which a program executing a method of controlling the display of digital broadcasting is recorded, the method comprising:
receiving an ensemble comprising at least one advertising channel (420/430); and
controlling so that advertisements transmitted via the at least one advertising channel (420/430) included in the received ensemble are compulsorily displayed.
